(19) **Europäisches Patentamt / European Patent Office / Office européen des brevets**

(11) **EP 1 603 766 B1**

(12) **EUROPÄISCHE PATENTSCHRIFT**

(45) Veröffentlichungstag und Bekanntmachung des Hinweises auf die Patenterteilung:
**12.12.2007 Patentblatt 2007/50**

(21) Anmeldenummer: 03732231.0

(22) Anmeldetag: **19.05.2003**

(51) Int Cl.:
**B60K 31/00** *(2006.01)* **G05B 13/00** *(2006.01)*

(86) Internationale Anmeldenummer:
**PCT/DE2003/001596**

(87) Internationale Veröffentlichungsnummer:
**WO 2004/041578 (21.05.2004 Gazette 2004/21)**

(54) **FAHRZEUGFÜHRUNGSSYSTEM**

VEHICLE GUIDANCE SYSTEM

SYSTEME DE GUIDAGE DE VEHICULE

(84) Benannte Vertragsstaaten:
**DE FR GB**

(30) Priorität: **02.11.2002 DE 10251038**

(43) Veröffentlichungstag der Anmeldung:
**14.12.2005 Patentblatt 2005/50**

(73) Patentinhaber: **ROBERT BOSCH GMBH**
**70442 Stuttgart (DE)**

(72) Erfinder:
• **UHLER, Werner**
**76646 Bruchsal (DE)**

• **WEILKES, Michael**
**74343 Sachsenheim (DE)**
• **SCHERL, Michael**
**71679 Asperg (DE)**
• **MICHI, Harald**
**75248 Oelbronn-Duerrn (DE)**

(56) Entgegenhaltungen:
**EP-A- 0 989 012          WO-A-01/87659**
**DE-A- 19 654 769          FR-A- 2 796 893**

EP 1 603 766 B1

**Beschreibung**

Stand der Technik

Die Erfindung betrifft ein Verfahren und eine Vorrichtung zum Bereitstellen von Stellgrößen für die Führung eines Kraftfahrzeugs.

Es sind Fahrzeugführungssysteme bekannt, die den Fahrer bei der Längsführung des Fahrzeugs (Beschleunigung und Verzögerung) und/oder bei der Querführung (Spurhaltung, Lenkung) unterstützen. Die Funktionen solcher Führungssysteme reichen von einer einfachen Geschwindigkeitsregelung auf eine vom Fahrer wählbare Wunschgeschwindigkeit über eine adaptive Geschwindigkeitsregelung (ACC; Adaptive Cruise Control), bei der auch die Abstände zu vorausfahrenden Fahrzeugen berücksichtigt werden, bis hin zu einer vollständig autonomen Führung des Fahrzeugs. Weitere Beispiele für Funktionen eines solchen Fahrzeugführungssystems sind die automatische Erzeugung von Kollisionswarnungen oder die automatische Einleitung von Notbremsungen oder Ausweichmanövern zur Vermeidung oder Milderung der Auswirkungen von Kollisionen. Die Verkehrssituation wird mit Hilfe von am Fahrzeug angebrachten Sensoren erfaßt, deren Signale einer Steuereinheit als Eingangsgrößen zugeführt werden. Die Eingangsgrößen betreffen einerseits die Bewegungsgrößen des geführten Fahrzeugs selbst, also beispielsweise dessen Fahrgeschwindigkeit, Beschleunigung, Giergeschwindigkeit und dergleichen, und andererseits Informationen über das Verkehrsumfeld, insbesondere Ortungsdaten von vorausfahrenden Fahrzeugen und sonstigen Hindernissen sowie gegebenenfalls Informationen über den Fahrbahnverlauf, die Fahrbahnbeschaffenheit und dergleichen. Für die Erfassung der Ortungsdaten sind typischerweise ein oder mehrere Abstandssensoren vorgesehen, beispielsweise ein Radarsensor zur Messung der Abstände und Relativgeschwindigkeiten von Radarzielen, im Falle eines winkelauflösenden Radarsensors auch zur Messung der Azimutwinkel der Radarziele, oder Lidarsensoren oder Kamerasysteme, insbesondere Stereokamerasysteme mit elektronischer Bildverarbeitung. Anhand der von diesen Sensoren gelieferten Eingangsgrößen berechnet die Steuereinheit Stellgrößen, die über Stellelemente des Antriebssystems und gegebenenfalls auch des Bremssystems auf das Fahrzeug einwirken. Ein Beispiel für ein ACC-System dieser Art wird beschrieben in SAE-Paper Nr. 96 10 10 "Adaptive Cruise Control, System Aspects and Development Trends", Winner et al., 1996.

Aus der DE 196 54 769 A1 ist ein Verfahren und eine Vorrichtung zur Fahrzeugsteuerung bzw. Fahrzeugregelung bekannt, bei dem eine Absolutgeschwindigkeit des Kraftfahrzeugs erfasst wird sowie weiterer Fahrzeugzustandsgrössen ermittelt werden und gleichzeitig mehrere Beschleunigungszwischenwerte für das Fahrzeug aus den ermittelten Fahrzeugzustandsgrössen ermittelt werden und eine Sollbeschleunigung nach Maßgabe der ermittelten Beschleunigungszwischenwerte erzeugt wird um Fahrzeugaktoren nach Maßgabe der ermittelten Sollbeschleunigung anzusteuern.

Die Berechnung der Stellgrößen durch die Steuereinheit ist von einer Anzahl von Parametern abhängig, von denen einige auch während des Regelbetriebs dynamisch, in Abhängigkeit von der Verkehrssituation, verändert werden können.

Beispielsweise werden bei der radargestützten Abstandsregelung zumeist mehrere Objekte gleichzeitig vom Radarsystem geortet. Es wird dann eine Objektliste erstellt, in der die einzelnen Objekte durch ihre Abstands-, Relativgeschwindigkeit und Winkeldaten repräsentiert sind. Bei den periodisch wiederholten Radarmessungen werden durch eine sogenannte Tracking-Prozedur die in der aktuellen Messung erfaßten Objekte mit den bei vorherigen Messungen erkannten Objekten identifiziert, und es werden die Bewegungen der einzelnen Objekte verfolgt. Da im Rahmen der Abstandsregelung ein auf der eigenen Fahrspur unmittelbar vorausfahrendes Fahrzeug in einem geeigneten Sicherheitsabstand verfolgt werden soll, wird ein Parameter benötigt, der bestimmt, welches der mehreren Objekte als Zielobjekt für die Abstandsregelung auszuwählen ist. Dieser Parameter muß anhand geeigneter Kriterien an die jeweilige Verkehrssituation angepaßt werden.

Die von den Sensoren an die Steuereinheit übermittelten Eingangssignale sind in der Praxis mehr oder weniger verrauscht und müssen deshalb mit Hilfe geeigneter Filter aufbereitet werden. Jede dieser Filterprozeduren wird durch einen oder mehrere Parameter beeinflußt, die insbesondere die zeitliche Auflösung des Filters bestimmen, beispielsweise Integrationszeiten, Abklingraten oder die Auswahl von Frequenzbereichen im Frequenzspektrum des Signals. Die Filter müssen jeweils so parametriert werden, daß einerseits eine ausreichende Rausch- und Störsignalunterdrückung erreicht wird, andererseits jedoch Veränderungen der Eingangsgrößen so schnell weitergegeben werden, daß eine rechtzeitige Reaktion des Führungssystems möglich ist.

Häufig werden in der Steuereinheit prädiktive Regler eingesetzt, die die Bewegungen des eigenen Fahrzeugs und Bewegungen der georteten Objekte in die Zukunft extrapolieren und so die Verkehrssituation zu einem in der Zukunft liegenden Zeitpunkt prädizieren. Die Stellgrößen werden dann so berechnet, daß innerhalb eines bestimmten Optimierungszeitintervalls eine optimale Anpassung an die prädizierte Verkehrssituation erreicht wird. Längere Vorhersagezeiträume und Optimierungszeitintervalle führen zu einem "vorausschauenden" Verhalten des Führungssystems und damit zu einem hohen Fahrkomfort, haben jedoch den Nachteil, daß die Wahrscheinlichkeit von Fehlprognosen zunimmt und unter Umständen auf plötzlich eintretende Änderungen nicht angemessen reagiert wird. Auch diese Parameter sind deshalb geeignet zu bestimmen.

Weiterhin ist bei der Prädiktion der zukünftigen Entwicklung einer Eingangsgröße, beispielsweise des Abstands zu einem Objekt, zu entscheiden, ob eine lineare Extrapolation durchgeführt werden soll, entsprechend der Annahme, daß die Relativgeschwindigkeit konstant bleibt, oder eine quadratische Extrapolation unter Annahme einer konstanten Beschleunigung oder aber eine Extrapolation noch höherer Ordnung. Gegebenenfalls müssen im Falle von plötzlichen Zustandsänderungen, beispielsweise bei einem abrupten Bremsmanöver des vorausfahrenden Fahrzeugs, bei der Prädiktion auch plausible Annahmen darüber gemacht werden, wie lange dieser Zustand anhalten wird.

Generell erfordert die Bestimmung der Parameter, die das Verhalten der verschiedenen Regelfunktionen der Steuereinheit festlegen, eine Bewertung der Verkehrssituation. Bisher werden für diese Bewertung als situationsspezifische Größen entweder die gemessenen oder abgeleiteten kinetischen zustandsgrößen des eigenen Fahrzeugs und der erfaßten Objekte benutzt, z. B. die Geschwindigkeit des eigenen Fahrzeugs, der Abstand und die Relativgeschwindigkeit des vorausfahrenden Fahrzeugs etc., oder einfache Größen, die aus diesen Zustandsgrößen abgeleitet werden, z. B. die "time to collision" (TTC), also die berechnete Zeit bis zum Aufprall.

Vorteile der Erfindung

Das erfindungsgemäße Verfahren mit den in Anspruch 1 angegebenen Merkmalen und die Vorrichtung mit den im ersten Vorrichtungsanspruch angegebenen Merkmalen haben den Vorteil, daß eine effizientere Anpassung der verschiedenen Parameter an die jeweilige Verkehrssituation ermöglicht wird.

Bei dem erfindungsgemäßen Verfahren wird zur Bewertung der Verkehrssituation aus einem Satz von Eingangsgrößen, der mindestens zwei Eingangsgrößen umfaßt, eine einzige Bewertungsgröße gebildet, die die Verkehrssituation kennzeichnet und als Grundlage für die Bestimmung mehrerer Parameter dient. Mathematisch handelt es sich bei der einzigen Bewertungsgröße um eine skalare Funktion auf dem durch die mehreren Eingangsgrößen definierten Vektorraum. Beispielsweise kann diese Bewertungsgröße als ein Maß für die Gefährlichkeit der Situation betrachtet werden. Wenn die Bewertungsgröße einen hohen Wert hat, sollten demgemäß die Parameter in der Steuereinheit so angepaßt werden, daß mit kürzerer Ansprechzeit auf die Situation reagiert werden kann. Wenn diese Bewertungsgröße einmal berechnet worden ist, steht sie für die Bestimmung gleich mehrerer Parameter zur Verfügung, so daß bei der Bestimmung der einzelnen Parameter nicht jedesmal wieder ein komplexes System von Bewertungskriterien geprüft zu werden braucht. Auf diese Weise wird gerade in kritischen Situationen mit einem Minimum an Rechenaufwand eine schnelle und effiziente Anpassung des Systemverhaltens an die Verkehrssituation erreicht.

Vorteilhafte Ausgestaltungen und Weiterbildungen der Erfindung sind in den Unteransprüchen angegeben.

Bevorzugt ist die Abhängigkeit der Bewertungsgröße von den Eingangsgrößen durch ein mindestens zweidimensionales Kennfeld gegeben, das in digitaler Form in der Steuereinheit gespeichert werden kann. Die Zahl der Dimensionen des Kennfeldes entspricht der Anzahl der zu dem betreffenden Satz gehörenden Eingangsgrößen. Diese Eingangsgrößen können unmittelbar zur Adressierung des Kennfeldspeichers benutzt werden, so daß die Bewertungsgröße in kürzester Zeit bestimmt werden kann. Da alle oder zumindest mehrere Parameter von derselben Bewertungsgröße abhängig sind, bleibt der Speicherplatzbedarf für die Kennfeldspeicherung in vertretbaren Grenzen.

Es ist zweckmäßig, wenn die Bewertungsgröße unter anderem für die Zielobjektauswahl herangezogen wird. Jedem georteten Objekt ist dann ein Satz von Eingangsgrößen zugeordnet, der insbesondere den Abstand und die Relativgeschwindigkeit des Objekts umfaßt und aus dem eine für dieses Objekt charakteristische Bewertungsgröße gebildet wird. Bei einem höherdimensionalen Kennfeld kann der Satz von Eingangsgrößen beispielsweise zusätzlich noch die Relativbeschleunigung des Objekts, den Azimutwinkel des Objekts, die Geschwindigkeit des eigenen Fahrzeugs und dergleichen umfassen. Die Bewertungsgröße ist dann vorzugsweise ein Maß für die Relevanz des Objekts, so daß die Zielobjektauswahl erfolgen kann, indem einfach dasjenige Objekt ausgewählt wird, für das die Bewertungsgröße maximal ist. Die maximale Bewertungsgröße bildet dann zugleich die Grundlage für die Bestimmung der übrigen Parameter wie Filterparameter, Optimierungszeitintervalle und dergleichen.

Bei der Bewertungsgröße kann es sich um eine rein fiktive Größe handeln, sie kann jedoch wahlweise eine bestimmte physikalische Bedeutung haben. Beispielsweise kann bei einer Annäherungssituation an ein vorausfahrendes Fahrzeug die Bewertungsgröße durch die konstante (negative) Beschleunigung definiert sein, die nötig wäre, die Geschwindigkeit des eigenen Fahrzeugs an die des vorausfahrenden Fahrzeugs anzupassen, also die Relativgeschwindigkeit des Zielobjekts auf null zu reduzieren, ohne daß der Abstand des Zielobjekts unter einen kritischen Mindestabstand abnimmt. Dieser Mindestabstand kann seinerseits wieder von weiteren Eingangsgrößen abhängig sein, beispielsweise von der Geschwindigkeit des eigenen Fahrzeugs und der vom Fahrer gewählten Zeitlücke (Objektabstand dividiert durch Relativgeschwindigkeit), mit der das Zielobjekt verfolgt wird.

Wenn der Ist-Abstand des Zielobjekts bereits kleiner ist als der kritische Abstand, kann die Bewertungsgröße als diejenige konstante Beschleunigung definiert werden, die nötig ist, den Objektabstand innerhalb eines bestimmten Zeitintervalls, das seinerseits wieder von anderen Eingangsgrößen abhängig sein kann, auf den kritischen Abstand zu vergrößern. Insgesamt ist die Bewertungsgröße dann für verschiedene Bereiche des Kennfelds unterschiedlich definiert, und die beiden Definitionen werden so aneinander angepaßt, daß die Bewertungsgröße an der Bereichsgrenze des Kennfeldes stetig ist. Vorzugsweise ist die Bewertungsgröße in der Dimension "Objektabstand" monoton fallend und in der Dimension "Relativgeschwindigkeit" ebefalls monoton fallend. Sie wird also um so größer, je näher das Objekt ist und je größer die Annäherungsgeschwindigkeit (negative Relativgeschwindigkeit) ist.

Zeichnung

Ein Ausführungsbeispiel der Erfindung ist in den Zeichnungen dargestellt und in der nachfolgenden Beschreibung näher erläutert.

Es zeigen:

Figur 1    ein Blockdiagramm einer Vorrichtung zum Bereitstellen von Stellgrößen für die Fahrzeugführung; und

Figur 2    ein Beispiel für eine durch ein zweidimensionales Kennfeld definierte Bewertungsgröße.

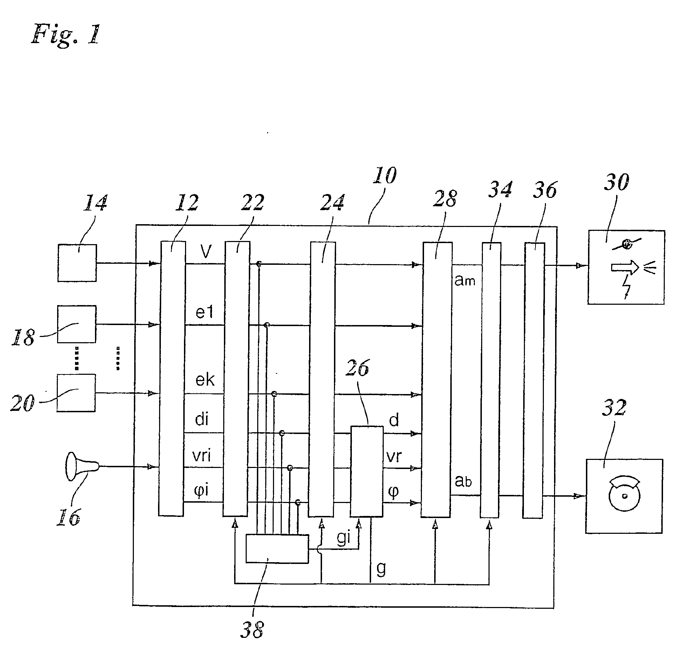

In Figur 1 ist eine Steuereinheit 10 gezeigt, die in einem Kraftfahrzeug installiert ist und dazu dient, Stellgrößen für die Fahrzeugführung bereitzustellen. Die Steuereinheit 10 weist eine Eingangsschaltung 12 auf, die Eingangsgrößen von verschiedenen Sensoren des Fahrzeugs aufnimmt, insbesondere von einem Geschwindigkeitssensor 14, der die Eigengeschwindigkeit V des Fahrzeugs mißt, und von einem Ortungsgerät 16, beispielsweise einem Radarsensor, der Ortungsdaten von vorausfahrenden Fahrzeugen und anderen möglichen Hindernissen bereitstellt. Weitere Sensoren 18, 20, die weitere Eingangsgrößen el - ek liefern, sind in Figur 1 lediglich summarisch dargestellt. Wahlweise können die Funktionen der Sensoren 14, 18, 20 auch von anderen Systemkomponenten des Fahrzeugs übernommen werden, die in der Lage sind, Eingangsgrößen bereitzustellen. So können beispielsweise die Eigengeschwindigkeit V, die Gierbeschleunigung des Fahrzeugs oder eine Eingangsgröße, die den Reibungskoeffizienten $\mu$ der Fahrbahn angibt, auch von einem elektronischen Stabilitätssystem (EPS) des Fahrzeugs bereitgestellt werden.

Aus den Signalen des Ortungsgerätes 16 bildet die Eingangsschaltung 12 im gezeigten Beispiel für jedes geortete Objekt i einen Satz von drei Eingangsgrößen, nämlich den Objektabstand di, die Relativgeschwindigkeit vri des Objekts und den Azimutwinkel φi des Objekts.

Der Eingangsschaltung 12 ist eine Filterschaltung 22 nachgeordnet, in der jede Eingangsgröße mit Hilfe geeigneter Filter aufbereitet wird. Die Funktion jedes Filters in der Filterschaltung 22 ist von einem oder mehreren Filterparametern abhängig. Beispielsweise ist es denkbar, daß eine Eingangsgröße in der Filterschaltung 22 über ein bestimmtes Integrationszeitintervall gemittelt wird, um Rausch- und Störsignale zu unterdrücken. Die Länge des Integrationszeitintervalls wäre dann ein solcher Filterparameter. Ebenso ist denkbar, daß aus einer Eingangsgröße ein gleitender Mittelwert gebildet wird, indem aus den in mehreren vorausgegangenen Meßzyklen gemessenen Werten dieser Eingangsgröße eine gewichtete Summe gebildet wird, wobei die Gewichtungsfaktoren exponentiell mit einer bestimmten Zeitkonstanten abklingen. Auch diese Zeitkonstante wäre dann ein Beispiel für einen Filterparameter.

Die gefilterten Eingangsgrößen werden im gezeigten Beispiel einer Prädiktionseinheit 24 zugeführt, die anhand der Eingangsgrößen und der zeitlichen Ableitungen derselben die künftige zeitliche Entwicklung der Eingangsgrößen vorhersagt, und bestimmt, welchen Wert die betreffende Eingangsgröße zu einem bestimmten Zeitpunkt in der Zukunft, also nach Ablauf eines bestimmten Verhersagezeitraums haben wird. Diese Vorhersagezeiträume können für die einzelnen Eingangsgrößen unterschiedlich lang sein und werden in Abhängigkeit von der Dynamik der Situation und unter Berücksichtigung der Reaktionszeit des Fahrzeugführungssystems bestimmt.

Die für jedes einzelne Objekt i aufgenommenen, gefilterten und prädizierten Eingangsgrößen di, vri und φi werden einem Auswahlmodul 26 zugeführt, das unter den mehreren Objekten ein einziges Objekt als Zielobjekt auswählt. In der Regel wird das ausgewählte Zielobjekt das auf der eigenen Fahrspur unmittelbar vorausfahrende Fahrzeug sein. Bei der Zielobjektauswahl wird zunächst für jedes einzelne Objekt anhand des Azimutwinkels und des Abstands eine Wahrscheinlichkeit dafür berechnet, daß es sich um ein Objekt auf der eigenen Fahrspur handelt. Wenn diese Wahrscheinlichkeit oberhalb eines bestimmten Schwellenwertes liegt, wird das Objekt der eigenen Fahrspur zugeordnet. Wenn mehrere Objekte der eigenen Fahrspur zugeordnet wurden, wird im Normalfall das Objekt mit dem kleinsten Objektabstand di als Zielobjekt ausgewählt.

Die Ortungsdaten d, vr und φ des ausgewählten Zielobjektes werden zusammen mit den übrigen Eingangsgrößen einem Regler 28 zugeführt, der aus diesen Eingangsgrößen mit Hilfe bekannter Regelalgorithmen eine Stellgröße am für Stellelemente 30 des Antriebssystems des Fahrzeugs oder eine Stellgröße $a_b$ für Stellelemente 32 des Bremssystems des Fahrzeugs berechnet.

Im gezeigten Beispiel ist im Regler 28 eine Begrenzungseinheit 34 nachgeordnet, die die Stellgrößen am und $a_b$ und/oder deren Änderungsraten so begrenzt, daß abrupte Beschleunigungs- oder Bremsvorgänge vermieden werden und somit ein hoher Fahrkomfort erreicht wird. Die in dieser Weise begrenzten Stellgrößen werden dann über eine Ausgangsschaltung 36 an die Stellelemente 30, 32 ausgegeben.

Die Funktionen der Filtereinheit 22, der Prädiktionseinheit 24, des Auswahlmoduls 26, des Reglers 28 und der Begrenzungseinheit 34, die in Figur 1 aus Gründen der Übersichtlichkeit als getrennte Blöcke dargestellt sind, können in der Praxis von einem oder mehreren Mikroprozessoren ausgeführt werden.

Die gefilterten Eingangsgrößen V, el - ek, di, vri, φi sowie gegebenenfalls daraus abgeleitete Größen, z. B. zeitliche Ableitungen, werden einem Bewertungsmodul 38 zugeführt, das aus diesen Größen für jedes geortete Objekt eine einzige Bewertungsgröße gi bildet, die ein Maß dafür darstellt, wie kritisch die jeweilige Verkehrssituation bezüglich des betreffenden Objektes ist. Die objektspezifischen Bewertungsgrößen gi werden dem Auswahlmodul 26 zugeführt und dienen dort als Kriterium für die Zielobjektauswahl: Als Zielobjekt wird dasjenige Objekt ausgewählt, für das die Bewertungsgröße gi maximal ist. Diese maximale Bewertungsgröße g wird dann vom Auswahlmodul 26 an die Filtereinheit 22, die Prädiktionseinheit 24, den Regler 28 und die Begrenzungseinheit 34 weitergeleitet und bestimmt dort die Wahl der Filterparameter, der Vorhersagezeiträume, sowie weitere Parameter der im Regler 28 ausgeführten Regelalgorithmen und der Begrenzungsfunktion der Begrenzungseinheit 34. Auf diese Weise wird eine Optimierung dieser Parameter im Hinblick auf die jeweilige Verkehrssituation erreicht.

Wenn ein hoher Wert der maximalen Bewertungsgröße g auf eine kritische Situation hindeutet, so werden generell die Filterparameter in der Filtereinheit 22 und die Parameter im Regler 28 im Sinne einer kürzeren Ansprechzeit verändert, und die Vorhersagezeiträume in der Prädiktionseinheit 24 können verkürzt werden. Die Begrenzungsfunktionen in der Begrenzungseinheit 34 können so verändert werden, daß in kritischen Situationen höhrere Beschleunigungen oder Verzögerungen sowie raschere Änderungen der Beschleunigungs- und Verzögerungswerte zugelassen werden.

Kernstück des Bewertungsmoduls 38 ist ein mehrdimensionales Kennfeld, beispielsweise in der Form eines digitalen Kennfeldspeichers, der von dem Mikroprozessor oder einem der Mikroprozessoren mit den digitalen Daten adressiert wird, die die Eingangsgrößen repräsentieren. Die Anzahl der Dimensionen des Kennfelds entspricht der Anzahl der berücksichtigten Eingangsgrößen, gegebenenfalls einschließlich der daraus abgeleiteten Größen. Für die Objektabstände di der verschiedenen Objekte ist jedoch nur eine Dimension vorgesehen, und entsprechend auch für die Relativgeschwindigkeiten und die Azimutwinkel der Objekte. Die Bewertungsgrößen gi werden nacheinander gebildet, indem der Kennfeldspeicher jeweils mit den Daten für das betreffende Objekt adressiert wird.

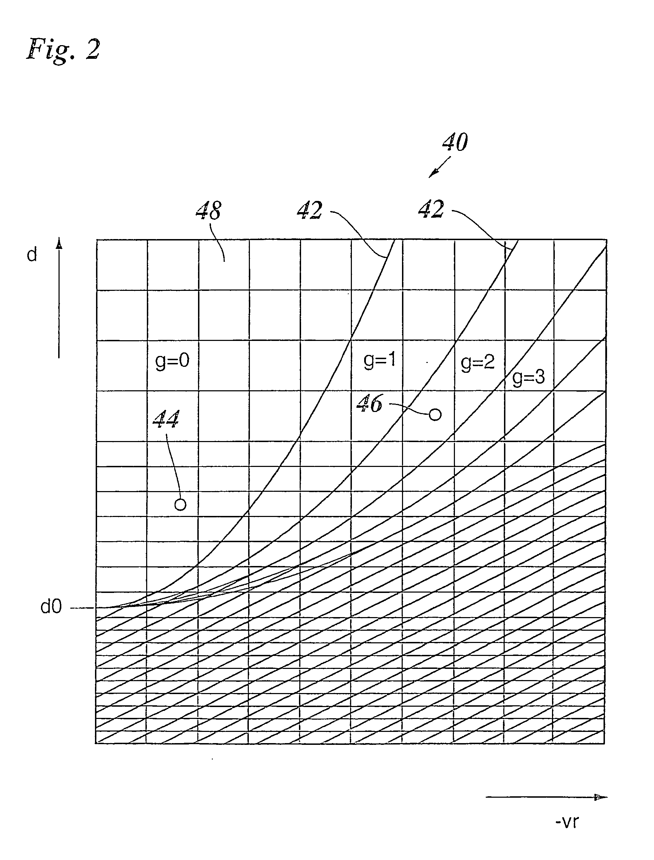

Figur 2 zeigt als vereinfachtes Beispiel einen zweidimensionalen Ausschnitt eines Kennfelds 40 mit den Dimensionen d (Objektabstand) und vr (Relativgeschwindigkeit des Objekts). Die in dem Kennfeld eingezeichneten Kurven 42 stellen "Iso-Linien", dar, für welche die Bewertungsgröße g (der Objekt-Index i ist hier fortgelassen) jeweils einen konstanten Wert hat. Die Iso-Linien 42 unterteilen somit das Kennfeld in Zonen mit unterschiedlichen Werten von g (g = 1, g = 2, ....)

Im gezeigten Beispiel haben die Iso-Linien 42 jeweils einen parabelförmigen Abschnitt entsprechend der Funktion

$$d = d0 + vr^2/(2*g) \tag{1}$$

Dahinter verbirgt sich die folgende physikalische Interpretation: Es wird angenommen, daß sich das eigene Fahrzeug einem im Abstand d vorausfahrenden Fahrzeug mit der Relativgeschwindigkeit vr annähert (vr ist negativ). Die Bewertungsgröße g repräsentiert dann die konstante Verzögerung (negative Beschleunigung) des Fahrzeugs, die notwendig wäre, damit sich das eigene Fahrzeug dem Objekt auf eine bestimmte kritische Distanz $d_0$ nähert und dabei auf die Absolutgeschwindigkeit des Objekts abgebremst wird, so daß dann vr = 0 gilt.

Die Absolutgeschwindigkeit des Objekts wird dabei als konstant angenommen.

Die obige Interpretation ist natürlich nur sinnvoll, wenn der tatsächliche Objektabstand d größer ist als d0. Im Grenzfall d = d0 müßte die Fahrzeugverzögerung und damit die Bewertungsgröße g unendlich hohe Werte annehmen, was physikalisch nicht möglich ist. Für kleine Objektabstände wird deshalb anstelle der obigen Gleichung (1) die folgende Gleichung (2) als Bestimmungsgleichung für die Iso-Linien 42 benutzt:

$$d = d0 - T*vr - g*T^2/2 \tag{2}$$

Die physikalische Interpretation dieser Gleichung (2) besteht darin, daß die Bewertungsgröße g der konstanten Fahrzeugverzögerung entspricht, die notwendig ist, damit innerhalb einer bestimmten Zeitspanne T die kritische Distanz d0 erreicht wird. Diese Definition ist auch unter der Bedingung d < d0 anwendbar. Die Gleichung (2) ist die Gleichung einer Geraden und entspricht somit einem geraden Abschnitt der betreffenden Iso-Linie 42. Für jeden Wert von g werden der parabelförmige Abschnitt und der gerade Abschnitt stetig aneinandergefügt, so daß man insgesamt ein stetiges Kennfeld erhält, das sowohl in d als auch in vr monoton fallend ist.

Weitere, in Figur 2 nicht gezeigte Dimensionen des Kennfelds betreffen die Eigengeschwindigkeit V des Fahrzeugs sowie die vom Fahrer gewählte Soll-Zeitlücke τ = d/vr, mit der ein vorausfahrendes Fahrzeug verfolgt werden soll. Für jede Kombination aus Werten der Größen V und τ erhält man ein weiteres, zu Figur 2 analoges zweidimensionales Kennfeld, das sich von dem Kennfeld nach Figur 2 beispielsweise in der Wahl der kritischen Distanz d0 und in der Wahl des Zeitintervalls T unterscheiden kann.

In Figur 2 sind als Beispiel zwei Objekte 44, 46 eingezeichnet, die jeweils durch ein entsprechendes Wertepaar (vr, d) repräsentiert werden. Beide Objekte 44, 46 sollen sich auf der eigenen Fahrspur befinden. Das Objekt 44 ist das unmittelbar vorausfahrende Fahrzeug, während das Objekt 46 das übernächste Fahrzeug ist und somit einen größeren Abstand d hat. Während normalerweise das unmittelbar vorausfahrende Fahrzeug, also das Objekt 44 als Zielobjekt ausgewählt würde, hat das hier beschriebene Verfahren zur Objektauswahl die Folge, daß in der in Figur 2 gezeigten Situation das Objekt 46, also das übernächste Fahrzeug, als Zielobjekt ausgewählt wird, weil für dieses Objekt 46 die Bewertungsgröße g größer ist. In der Praxis entspräche dies der Situation, daß das übernächste Fahrzeug (Objekt 46) abrupt gebremst hat, so daß seine Relativgeschwindigkeit dem Betrage nach sehr groß ist. Das unmittelbar vorausfahrende Fahrzeug (Objekt 44) hat auf diesen Bremsvorgang noch nicht reagiert und hat deshalb noch eine Relativgeschwindigkeit in der Nähe von 0. Durch das hier beschriebene Verfahren würde mit der Auswahl des Objekts 46 als Zielobjekt vorausschauend dem Bremsvorgang dieses Fahrzeugs Rechnung getragen, und die Geschwindigkeit des eigenen Fahrzeugs würde bereits verringert, bevor das unmittelbar vorausfahrende Fahrzeug auf den Bremsvorgang reagiert hat. Dieses Systemverhalten trägt in der Praxis nicht nur zu einer erhöhten Fahrsicherheit, sondern auch zu einer erheblichen Verstetigung des Verkehrsflusses bei hoher Verkehrsdichte bei.

In Figur 2 ist das Kennfeld 40 in quadratische oder rechteckige Zellen 48 unterteilt. Jede dieser Zellen 48 repräsentiert eine Speicherzelle des digitalen Kennfeldspeichers. Die Zellen 48 haben in unterschiedlichen Bereichen des Kennfelds 40 unterschiedliche Größen und sie sind dort am kleinsten, wo sich die Bewertungsgröße g am stärksten ändert, d. h., wo die Iso-Linien 42 am dichtesten liegen. Durch die variable Größe der Zellen 48 wird einerseits eine hinreichend hohe Auflösung des Kennfelds und andererseits, insbesondere bei hochdimensionalen Kennfeldern, eine erhebliche Verringerung des Speicherplatzbedarfes erreicht.

## Patentansprüche

1. Verfahren zum Bereitstellen von Stellgrößen ($a_m$, $a_b$) für die Führung eines Kraftfahrzeugs in Abhängigkeit von Eingangsgrößen (V, el, ek, di, vri, φi), die die Verkehrssituation repräsentieren indem diese Eingangsgrößen (V, el, ek, di, vri, φi) Ortungsdaten (di, vri, φi) von georteten Objekten, und von anderen Fahrzeugen, umfassen, und in Abhängigkeit von dynamisch veränderbaren Parametern, aus einem Satz von mehreren Eingangsgrößen für mehrere geortete Objekte jeweils eine objektspezifische Bewertungsgröße (gi) anhand der Ortungsdaten (di, vri, φi) für das entsprechende Objekt gebildet wird und daß mehrere der Parameter anhand derselben Bewertungsgröße bestimmt werden und daß einer der anhand der Bewertungsgröße (g) ausgewählten Parameter die Auswahl eines Zielobjekts unter mehreren georteten Objekten betrifft, **dadurch gekennzeichnet, dass** dasjenige Objekt als Zielobjekt ausgewählt wird, für das die Bewertungsgröße (g) maximal ist und Stellgrößen für eine adaptive Geschwindigkeitsregelung des Fahrzeugs bereitgestellt werden.

2. Verfahren nach Anspruch 1, **dadurch gekennzeichnet, daß** die Bewertungsgröße (g) monoton vom Objektabstand (di) und monoton von der Relativgeschwindigkeit (vri) eines georteten Objekts abhängig ist.

3. Verfahren nach Anspruch 1 oder 2, **dadurch gekennzeichnet, daß** die Bewertungsgröße anhand eines mehrdimensionalen Kennfeldes (40) aus dem Satz der Eingangsgrößen bestimmt wird.

4. Verfahren nach Anspruch 3, **dadurch gekennzeichnet, daß** das Kennfeld (40) in mindestens zwei Zonen aufgeteilt ist, die verschiedenen Bereichen des Objektabstands (d) entsprechen und in denen die Bewertungsgröße (g) nach unterschiedlichen Funktionen berechnet wird, und daß diese Funktionen an der Grenze (d0) zwischen den Zonen stetig in einander übergehen.

5. Verfahren nach einem der vorstehenden Ansprüche, **dadurch gekennzeichnet, daß** mindestens einer der anhand der Bewertungsgröße (g) bestimmten Parameter ein Parameter ist, der bestimmt, wie schnell und/oder in welchem Ausmaß mit einer Änderung der Stellgrößen ($a_m$, $a_b$) auf Änderungen der Eingangsgrößen reagiert wird.

6. Verfahren nach Anspruch 5, **dadurch gekennzeichnet, daß** mindestens einer der anhand der Bewertungsgröße (g) bestimmten Parameter ein Filterparameter für die Filterung einer der Eingangsgrößen ist.

7. Vorrichtung zum Bereitstellen von Stellgrößen (am, ab) für die Führung eines Kraftfahrzeugs, mit einer Steuereinheit (10), die von Sensoren (14,16,18,20) Eingangsgrößen aufnimmt, die die Verkehrssituation repräsentieren, und die aus diesen Eingangsgrößen die Stellgrößen berechnet und an Stellelemente (30,32) des Antriebssystems und des Bremssystems des Fahrzeugs ausgibt, **dadurch gekennzeichnet, daß** in der Steuereinheit (10) das Verfahren nach einem der Ansprüche 1 bis 8 durchgeführt wird.

**Claims**

1. Method for providing manipulated variables ($a_m$, $a_b$) for guiding a motor vehicle as a function of input variables (V, el, ek, di, vri, $\phi$i) which represent the traffic situation, by virtue of the fact that these input variables (V, el, ek, di, vri, $\phi$i) comprise locating data (di, vri, $\phi$i) from located objects and from other vehicles, that an object-specific evaluation variable (gi) is respectively formed as a function of dynamically variable parameters from a set of a number of input variables for a number of located objects with the aid of the locating data (di, vri, $\phi$i) for the corresponding object, a number of the parameters are determined with the aid of the same evaluation variable, and that one of the parameters selected with the aid of the evaluation variable (g) relates to the selection of a target object among a number of located objects, **characterized in that** the object selected as target object is that object for which the evaluation variable (g) is a maximum, and manipulated variables are provided for adaptive speed control of the vehicle.

2. Method according to Claim 1, **characterized in that** the evaluation variable (g) depends monotonically on the object distance (di) and monotonically on the relative speed (vri) of a located object.

3. Method according to Claim 1 or 2, **characterized in that** the evaluation variable is determined with the aid of a multidimensional family of characteristics (40) from the set of input variables.

4. Method according to Claim 3, **characterized in that** the family of characteristics (40) is divided into at least two zones which correspond to different ranges of the object distance (d) and in which the evaluation variable (g) is calculated using different functions, and **in that** these functions merge continuously into one another at the boundary (d0) between the zones.

5. Method according to one of the preceding claims, **characterized in that** at least one of the parameters determined with the aid of the evaluation variable (g) is a parameter which determines how quickly and/or to what extent the manipulated variables ($a_m$, $a_b$) are changed as a reaction to changes in the input variables.

6. Method according to Claim 5, **characterized in that** at least one of the parameters determined with the aid of the evaluation variable (g) is a filter parameter for filtering one of the input variables.

7. Device for providing manipulated variables ($a_m$, $a_b$) for guiding a motor vehicle, having a control unit (10) which picks up from sensors (14, 16, 18, 20) input variables which represent the traffic situation, calculates the manipulated variables from these input variables and outputs them to setting elements (30, 32) of the drive system and of the brake system, **characterized in that** the method according to one of Claims 1 to 8 is carried out in the control unit (10).

**Revendications**

1. Procédé pour fournir des grandeurs de réglage ($a_m$, $a_b$) pour guider un véhicule en fonction de grandeurs d'entrée (V, el, ek, di, vri, φi) représentant l'état de la circulation, les grandeurs d'entrée (V, el, ek, di, vri, φi) comprenant les données de lieu (di, vri, φi) d'objets localisés et d'autres véhicules et en fonction des paramètres variables de manière dynamique, à partir d'un jeu de plusieurs grandeurs d'entrée pour plusieurs objets localisés, on forme chaque fois une grandeur d'évaluation (gi) spécifique de l'objet, à l'aide des données de localisation (di, vir, φi) de l'objet correspondant et on détermine plusieurs paramètres à l'aide de la même grandeur d'évaluation et l'un des paramètres sélectionnés avec la grandeur d'évaluation (g) concerne la sélection d'un objet cible parmi plusieurs objets localisés,
**caractérisé en ce qu'**
on choisit comme objet cible, l'objet pour lequel la grandeur d'évaluation (g) est maximale et les grandeurs de réglage sont fournies pour une régulation de vitesse adaptative du véhicule.

2. Procédé selon la revendication 1,
**caractérisé en ce que**
la grandeur d'évaluation (g) dépend de façon monotone de la distance de l'objet (di) et de façon monotone de la vitesse relative (vri) d'un objet localisé.

3. Procédé selon la revendication 1 ou 2,
   **caractérisé en ce que**
   la grandeur d'évaluation se détermine à l'aide d'un champ de caractéristiques (40) à plusieurs dimensions à partir du jeu des grandeurs d'entrée.

4. Procédé selon la revendication 3,
   **caractérisé en ce que**
   le champ de caractéristique (40) est divisé en au moins deux zones qui correspondent à des plages différentes de distances d'objets (d) et dans lesquelles on calcule la grandeurs d'évaluation (g) selon des fonctions différentes et **en ce que** ces fonctions se rejoignent de manière continue à la limite (d0) entre les zones.

5. Procédé selon l'une des revendications précédentes,
   **caractérisé en ce qu'**
   au moins l'un des paramètres définis à l'aide de la grandeur d'évaluation (g) est un paramètre qui détermine à quelle vitesse et/ou dans quelle mesure on réagit par une variation des grandeurs de réglage ($a_m$, $a_b$) à une variation des grandeurs d'entrée.

6. Procédé selon la revendication 5,
   **caractérisé en ce qu'**
   au moins l'un des paramètres défini à l'aide de la grandeur d'évaluation (g) est un paramètre de filtre pour filtrer l'une des grandeurs d'entrée.

7. Dispositif pour fournir des grandeurs de réglage ($a_m$, $a_b$) pour guider un véhicule automobile comprenant une unité de commande (10) recevant des grandeurs d'entrée venant de capteurs (14, 16, 18, 20) représentant l'état de la circulation et qui, à partir des grandeurs d'entrée, calcule les grandeurs de réglage pour les transmettre à des éléments de réglage (30, 40) du système d'entraînement et du système de frein du véhicule,
   **caractérisé en ce que**
   l'unité de commande (10) exécute le procédé selon l'une des revendications 1 à 8.

Fig. 1

am

ab

d
vr
φ

g

gi

V
e1
ek
di
vri
φi

30

32

36

34

28

10

26

24

22

12

38

14

18

20

16

*Fig. 2*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19654769 A1

**In der Beschreibung aufgeführte Nicht-Patentliteratur**

- **WINNER et al.** Adaptive Cruise Control, System Aspects and Development Trends. *SAE-Paper,* 1996, vol. 10 (96), 10